# EUROPEAN PATENT APPLICATION

(11) **EP 4 350 979 A1**
(43) Date of publication of application: **10.04.2024**
(21) Application number: 22810980.7
(22) Date of filing: 24.03.2022
(51) Int. Cl.: H02P 29/024

(54) **COMMUNICATION SYSTEM, DIAGNOSTIC DEVICE, AND DIAGNOSTIC METHOD**

(30) Priority: 27.05.2021 JP 2021089594
(71) Applicant: Minebea Mitsumi Inc., Kitasaku-gun, Nagano 3890293 (JP)
(72) Inventor: TAKEZAWA Kazuma, Kitasaku-gun, Nagano 389-0293 (JP)
(74) Representative: Zabel, Julia Elisabeth
(86) International application number: PCT/JP2022/014037
(87) International publication number: WO 2022/249704

(57) **Abstract**

The objective of the present invention is to achieve, in a communication system, failure prediction of slave equipment in which a storage device having a small storage capacity is installed. This communication system comprises a drive control device for controlling the drive of a motor in accordance with information received from a higher-level device, a diagnostic device for diagnosing a driving state of the motor, and a network to which the drive control device and the diagnostic device are connected, wherein: the drive control device includes a control information acquiring unit for acquiring, from the higher-level device, control information for controlling the drive of the motor, a drive control unit for controlling the drive of the motor in accordance with the control information, and a transmitting unit for transmitting operation result information of the motor, including information relating to a drive quantity of the motor and loss of synchronization of the motor, to the network; and the diagnostic device includes an information acquiring unit for acquiring the operation result information and the control information from the network, a failure predicting unit for predicting failure of the motor on the basis of the operation result information and the control information, and a notifying unit for notifying the prediction of the motor failure to the higher-level device.

## Description

### Technical Field

The present invention relates to a communication system, a diagnostic device, and a diagnostic method.

### Background Art

Heating Ventilation and Air-Conditioning (HVAC) is known as an air conditioning unit for in-vehicle use. HVAC is an air conditioning unit that uses a fan or a motor to blow air dehumidified, cooled, heated or the like by a heat exchanger, in order to keep a space comfortable. In general, an HVAC system for in-vehicle use constitutes a local interconnect network (LIN) communication network in which an electronic control unit (ECU) serving as one master device and a plurality of slave devices are connected to each other via a bus line (hereinafter, also referred to as a "LIN bus") that is a single-wire communication line.

The slave device in the HVAC system is, for example, a drive device usable in the HVAC system, such as a damper actuator. The drive device includes a motor (for example, a stepping motor), a drive control device that controls driving of the motor, and a power transmission mechanism that transmits a rotational force of the motor to a drive target. The power transmission mechanism is coupled to a movable part of an air conditioner in the HVAC system, and drives the movable part by transmitting the rotational force of the motor to the movable part of the air conditioner.

The drive device operates based on a control frame transmitted from the ECU of the master device via the LIN bus. Specifically, a control circuit of the motor in the drive control device in each drive device serves as a slave device, communicates with the ECU of the master device via the LIN bus, and controls driving of the motor based on the control frame received from the ECU of the master device, thereby controlling an operation of the drive device.

In general, in the LIN communication, the master device generates a request (token) specifying a motor control circuit in the drive device that is a control target, as a slave device, and transmits the request to the LIN bus with a frame for LIN communication. Each slave device that has received the frame including the request from the LIN bus transmits a frame including a response (data) corresponding to the request to the LIN bus toward the master device when the request is directed to the slave device.

Patent Document 1 discloses a communication system capable of coping with an abnormal state (unauthorized access or the like) of a communication network. In Patent Document 1, a first communication device generates a trigger signal and transmits the trigger signal to the communication network. In Patent Document 1, a second communication device receives the trigger signal via the communication network, generates a response signal to the trigger signal, and transmits the response signal to the communication network. In Patent Document 1, a monitoring device receives the trigger signal and the response signal via the communication network, determines an abnormal state of the communication network based on reception states of the trigger signal and the response signal, and outputs the abnormal state.

### Citation List

### Patent Literature

Patent Document 1: JP 2018-157288 A

### Summary of Invention

### Technical Problem

Meanwhile, in response to a demand for cost reduction in recent years, it has been considered to replace an IC (Integrated Circuit) used for the motor control circuit in the drive device with an inexpensive IC including a storage device with a smaller storage capacity.

However, some storage devices mounted on inexpensive ICs do not have enough storage capacity to store all function programs necessary for an operation of the device. When an IC mounted with a storage device having a limited storage capacity is used, the drive device may not be able to store a program for predicting a failure of the drive device in the storage device, and may not be able to perform failure prediction of the drive device.

The present invention has been made in view of the problems described above, and an object of the present invention is to realize failure prediction of a slave device mounted with a storage device having a small storage capacity in a communication system in which a master device and a plurality of slave devices are connected to each other via a communication bus.

### Solution to Problem

A communication system according to a representative embodiment of the present invention includes a drive control device configured to control driving of a motor in accordance with information received from a higher-level device, a diagnostic device configured to diagnose a driving state of the motor, and a network to which the drive control device and the diagnostic device are connected. The drive control device includes a control information acquisition unit configured to acquire control information for controlling driving of the motor from the higher-level device, a drive control unit configured to control driving of the motor in accordance with the control information, and a transmission unit configured to transmit operation result information about the motor to the network, the operation result information including information about a drive amount of the motor and a step-out of the motor. The diagnostic device includes: an information acquisition unit configured to acquire the operation result information and the control information from the network, a failure prediction unit configured to predict a failure of the motor based on the operation result information and the control information, and a notification unit configured to notify the higher-level device of the prediction of the failure of the motor.

### Advantageous Effects of Invention

According to the communication system of the present invention, in a communication system in which a master device and a plurality of slave devices are connected by a communication bus, it is possible to realize failure prediction of a slave device mounted with a storage device having a small storage capacity.

### Brief Description of Drawings

FIG. 1 illustrates a system configuration of a communication system in an embodiment of the present invention.
FIG. 2 is an exploded perspective view of a drive device illustrated in FIG. 1.
FIG. 3 is a functional block diagram illustrating a functional configuration of the drive device illustrated in FIG. 1.
FIG. 4 is a functional block diagram illustrating a functional configuration of a diagnostic device illustrated in FIG. 1.
FIG. 5 illustrates one specific example of a content of control information in the present embodiment.
FIG. 6 illustrates one specific example of a content of operation result information in the present embodiment.
FIG. 7 illustrates one specific example of operation history information in the present embodiment.
FIG. 8 is a flowchart illustrating one specific example of failure prediction processing by the diagnostic device illustrated in FIG. 1.
FIG. 9 is a flowchart illustrating one specific example of operation guarantee determination processing in the failure prediction processing by the diagnostic device illustrated in FIG. 1.
FIG. 10 is a flowchart illustrating one specific example of step-out number determination processing in the failure prediction processing by the diagnostic device illustrated in FIG. 1.
FIG. 11 is a flowchart illustrating one specific example of pseudo step-out number determination processing in the failure prediction processing by the diagnostic device illustrated in FIG. 1.

### Description of Embodiments

An embodiment of the present invention will be described below with reference to the drawings.

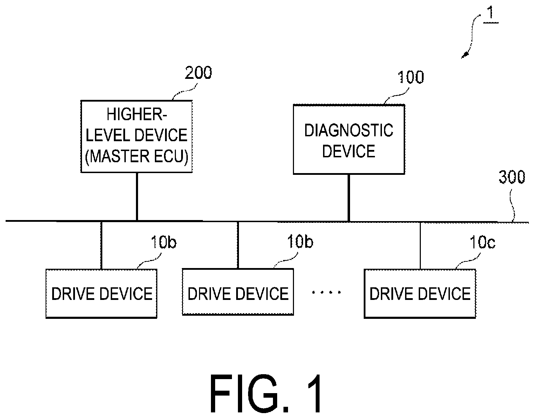

FIG. 1 illustrates a system configuration of a communication system 1 in an embodiment of the present invention. As illustrated in FIG. 1, the communication system 1 includes one or more drive devices 10a, 10b, and 10c, one diagnostic device 100, one higher-level device (Master ECU) 200, and a network 300. The network 300 connects the drive devices 10a, 10b, and 10c, the diagnostic device 100, and the higher-level device 200 to each other.

The communication system 1 constitutes, for example, a LIN communication network in which the higher-level device 200 and the plurality of drive devices 10a to 10c are connected to each other by the network 300 serving as a LIN bus. For example, the communication system 1 is a heating ventilation and air-conditioning (HVAC) system serving as an air conditioning unit for in-vehicle use.

The higher-level device 200 and the drive devices 10a to 10c are connected to the network 300. Specifically, the higher-level device 200 and the drive devices 10a to 10c are connected to signal lines constituting the network 300.

The higher-level device 200 is a device functioning as a master device that comprehensively controls operations of the plurality of drive devices 10a to 10c as slave devices. The higher-level device 200 is, for example, an ECU in the HVAC system for in-vehicle use. The higher-level device 200 transmits a control signal (request) to the designated drive devices 10a to 10c via the network 300 to control the operations of the designated drive devices 10a to 10c.

The drive devices 10a to 10c are, for example, devices for driving an air conditioner in the HVAC system for in-vehicle use. Examples of the drive devices 10a to 10c may include various actuators usable in the HVAC system, such as damper actuators, valve actuators, fan actuators, and pump actuators.

In the description below, when the drive devices 10a to 10c are not distinguished from each other, they may be simply referred to as a "drive device 10".

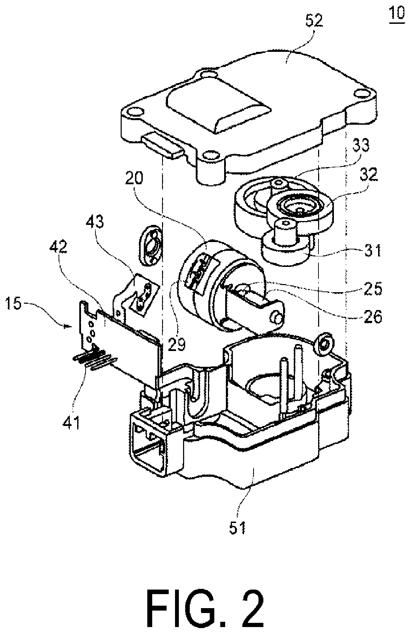

FIG. 2 is an exploded perspective view of the drive device 10.

As illustrated in FIG. 2, the drive device 10 is covered with a case 51 and a cover 52. A motor 20, a drive control device 15 for controlling driving of the motor 20, and a secondary gear 31, a tertiary gear 32, and an output gear 33 as a power transmission mechanism for transmitting a rotational force of the motor 20 to a drive target are housed inside the drive device 10.

The motor 20 generates a drive force of the drive device 10. The motor 20 is a stepping motor, for example. The motor 20 is driven by, for example, two phase excitation of an A phase and a B phase. The motor 20 includes an A-phase coil (not illustrated) and a B-phase coil (not illustrated). The motor 20 operates as drive power is supplied from the drive control device 15 to the coils of the respective phases.

A primary gear 26 is attached to an output shaft 25 of the motor 20. The primary gear 26 of the motor 20 meshes with the secondary gear 31. The secondary gear 31 meshes with the tertiary gear 32. The tertiary gear 32 meshes with the output gear 33. An external output gear provided for the output gear 33 is exposed on a bottom surface of the case 51, and the external output gear is coupled to a drive target.

The drive control device 15 communicates with the higher-level device 200 via the network 300 (LIN bus), and controls an overall operation of the drive device 10 by controlling driving of the motor 20 based on a control frame (command) received from the higher-level device 200. When the drive control device 15 drives the motor 20 based on the command from the higher-level device 200, the primary gear 26 connected to the output shaft 25 of the motor 20 rotates. A drive force resulting from the rotation of the primary gear 26 is transmitted to the secondary gear 31, the tertiary gear 32, the output gear 33, and the external output gear in this order, and the external output gear drives a movable part of the air conditioner that is a drive target.

The drive control device 15 includes, as hardware resources, a printed circuit board 42, a flexible printed circuit board 43 that connects the printed circuit board 42 and a motor terminal of the motor 20, and the like. The printed circuit board is provided with a motor control circuit, a motor drive circuit, a switch, and a plurality of external connection terminals 41. Examples of the plurality of external connection terminals 41 may include a power supply terminal for supplying power to the drive control device 15, a ground terminal connected to a ground potential, a communication terminal for the drive control device 15 to perform LIN communication with the higher-level device 200, and the like. As illustrated in FIG. 2, each of the external connection terminals 41 is exposed to the outside of the case 51 and the cover 52.

Note that the circuit housed inside the case 51 and the cover 52 may be, for example, only a motor drive circuit. For example, the motor control circuit may include a motor drive circuit provided inside the case 51 and the cover 52, and a motor control circuit provided outside the case 51 and the cover 52.

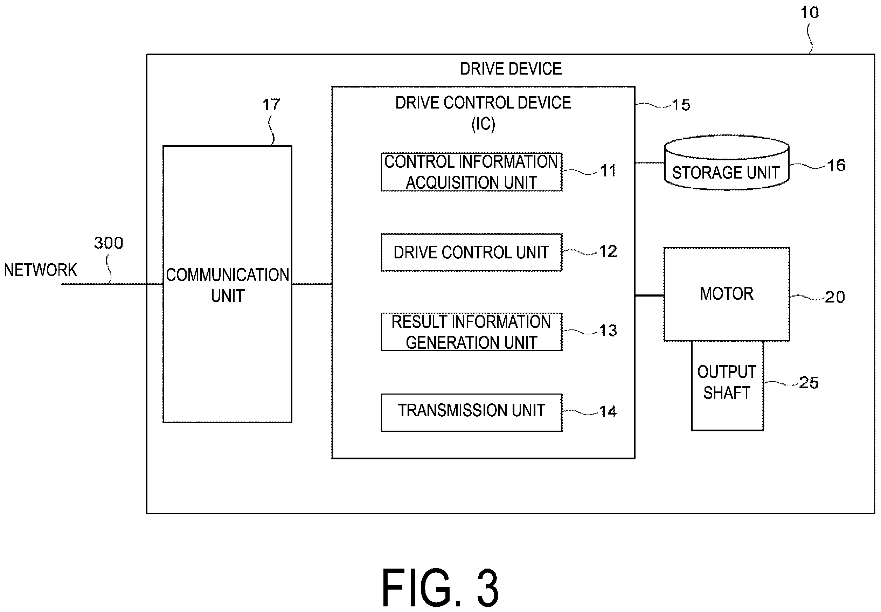

FIG. 3 is a functional block diagram illustrating a functional configuration of the drive device 10.

As illustrated in FIG. 3, the drive device 10 includes the motor 20, the drive control device 15 for controlling driving of the motor 20, a storage unit 16, and a communication unit 17.

The drive control device 15 is an example of a computer realized by a processor such as a central processing unit (CPU) and a calculation memory such as a random access memory (RAM). Specifically, the drive control device 15 is realized by, for example, an IC less expensive than a micro control unit (MCU) included in the higher-level device 200 or the diagnostic device 100. The CPU is an arithmetic device that realizes various functions by executing arithmetic processing of a program. The RAM is a volatile memory in which a program to be arithmetically processed by the CPU is stored. The drive control device 15 stores function programs stored in the storage unit 16 in the RAM. The function programs stored in the storage unit 16 are programs for realizing various functions of the drive control device 15. The CPU realizes various functions of the drive control device 15 by executing the function programs stored in the RAM. Among the function programs, programs corresponding to functions to be realized are sequentially stored in the RAM and sequentially executed by the CPU. The program is configured by a function, a fixed value, and the like corresponding to a function. When executing a program, not only a function but also data that is a fixed value is required.

The storage unit 16 is realized by, for example, a nonvolatile memory, such as an electrically erasable programmable read-only memory (EEPROM). The storage unit 16 is a storage device for program storage in which programs for realizing various functions are stored. For example, the storage unit 16 stores the function programs.

The communication unit 17 is a functional unit for performing LIN communication with the higher-level device 200. In the LIN communication, the communication unit 17 can receive a request (header) transmitted from the higher-level device 200 as a master device and transmit a response (data) to the request.

The drive control device 15 realizes following functional units by the CPU and the RAM cooperating with each other to execute a program stored in the storage unit 16. The drive control device 15 includes a control information acquisition unit 11, a drive control unit 12, a result information generation unit 13, and a transmission unit 14 as specific functional units realized by programs. The drive control device 15 is connected to the network 300 via the communication unit 17.

The control information acquisition unit 11 acquires control information, i.e., a command of a request from the higher-level device 200 connected to the network 300.

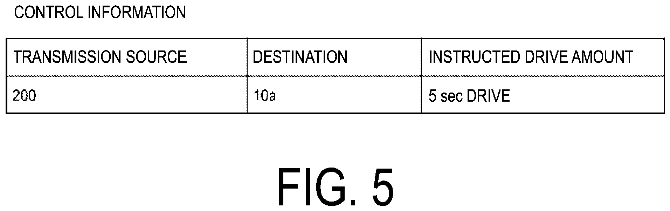

FIG. 5 illustrates one specific example of a content of the control information in the present embodiment. The control information is information transmitted from the higher-level device 200 to the drive device 10. The control information is information for controlling driving of the motor. The control information stores information for driving the drive device 10 that has received the control information. As illustrated in FIG. 5, in the control information, for example, information about a transmission source, information about a destination, and information about an instructed drive amount are stored. The information about a transmission source is information capable of identifying the higher-level device 200 that is a transmission source of the control information. The information about a destination is information capable of identifying the drive devices 10a to 10c that are transmission destinations of the control information. The information about an instructed drive amount is information about a drive amount instructed to the motor 20 of each of the drive devices 10a to 10c. In FIG. 5, for example, the information about an instructed drive amount is information about a time (hereinafter, referred to as an "operation time") from an operation instruction to an operation end of the drive devices 10a to 10c. In FIG. 5, in the information about a transmission source, information capable of identifying the higher-level device 200 is stored. In the information about a destination, information capable of identifying that a transmission destination of the control information is the drive device 10a is stored. The identifiable information may be a character, a number, or a combination thereof. The identifiable information may be any information as long as the information does not overlap between the higher-level device 200 and the drive devices 10a to 10c. In the information about an instructed drive amount, information for instructing the drive device 10a to perform driving for 5 sec is stored. Note that a value of a position (Pos), which is an arbitrary numerical value identifying a position of the output shaft 25 of each of the drive devices 10a to 10c, may be stored in the information about an instructed drive amount. When the information stored in the information about an instructed drive amount is the value of Pos, for example, information instructing to move from Pos: 0 to Pos: 5000 may be stored.

The drive control unit 12 generates signals for controlling driving of the motor 20, i.e., various control signals, in response to the command of the request from the higher-level device 200 acquired by the control information acquisition unit 11. The drive control unit 12 can realize various functions of the drive device 10, such as drive control of the motor 20 of the drive device 10 by generating various control signals such as a drive control signal, and response to the higher-level device 200. The drive control unit 12 controls energization of the motor 20 based on the drive control signal. The drive power of the motor 20 changes in accordance with a duty ratio of a pulse width modulation (PWM) signal as a drive control signal.

The drive control unit 12 measures a current (coil current) flowing through a coil of each phase of the motor 20. The coil current is acquired from a current sensor realized by, for example, a shunt resistor. The drive control unit 12 measures an input voltage as a power supply voltage input to the power supply terminal of the motor 20. The input voltage is, for example, a DC voltage supplied from a battery. In addition, the drive control unit 12 measures a back electromotive voltage induced in a coil through which energization is stopped among the coils of the plurality of phases of the motor 20.

The result information generation unit 13 generates operation result information about the motor 20 including information about a drive amount of the motor 20 and a step-out of the motor 20.

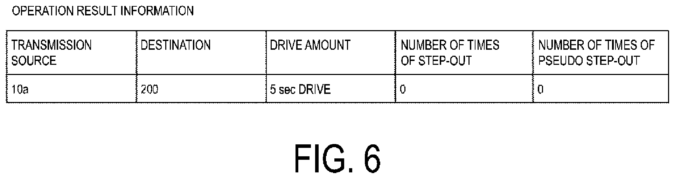

FIG. 6 illustrates one specific example of a content of operation result information in the present embodiment. The operation result information is information transmitted from the drive device 10 to the higher-level device 200. In the operation result information, information indicating a result of an operation of the drive device 10 driven based on the control information is stored. As illustrated in FIG. 6, in the operation result information, for example, information about a transmission source, information about a destination, information about a drive amount, a value of the number of times of step-out, and a value of the number of times of pseudo step-out are stored. The information about a transmission source and the information about a destination are the same as the information included in the control information described above, and thus description of the information will be omitted. The information about a drive amount is information indicating a result of the drive amount in the motor 20 of the drive device 10 driven in accordance with the information about an instructed drive amount. In FIG. 6, information indicating a result that the drive device 10a has been driven for 5 sec is stored in the information about a drive amount. Note that the result of the value of the position (Pos), which is an arbitrary numerical value identifying a position of the output shaft 25 of the drive device 10, may be stored in the information about a drive amount, similarly to the information about an instructed drive amount. The value of the number of times of step-out indicates the number of times of occurrence of stall (step-out) in the motor 20 of the drive device 10 driven in accordance with the information about an instructed drive amount. The result information generation unit 13 detects the step-out of the motor 20 based on a change in the coil current, the input voltage, or the back electromotive voltage of the motor 20 acquired by the drive control unit 12, and calculates the number of times of step-out. The value of the number of times of pseudo step-out indicates the number of times that the motor 20 of the drive device 10 driven in accordance with the information about an instructed drive amount is recognized as stall (step-out) even though the motor operates normally. The result information generation unit 13 detects the pseudo step-out of the motor 20 based on an abnormal change in the coil current, the input voltage, the back electromotive voltage, or the like of the motor 20 acquired by the drive control unit 12, and calculates the number of times of pseudo step-out.

The transmission unit 14 transmits the operation result information about the motor 20 generated by the result information generation unit 13 to the network 300 via the communication unit 17.

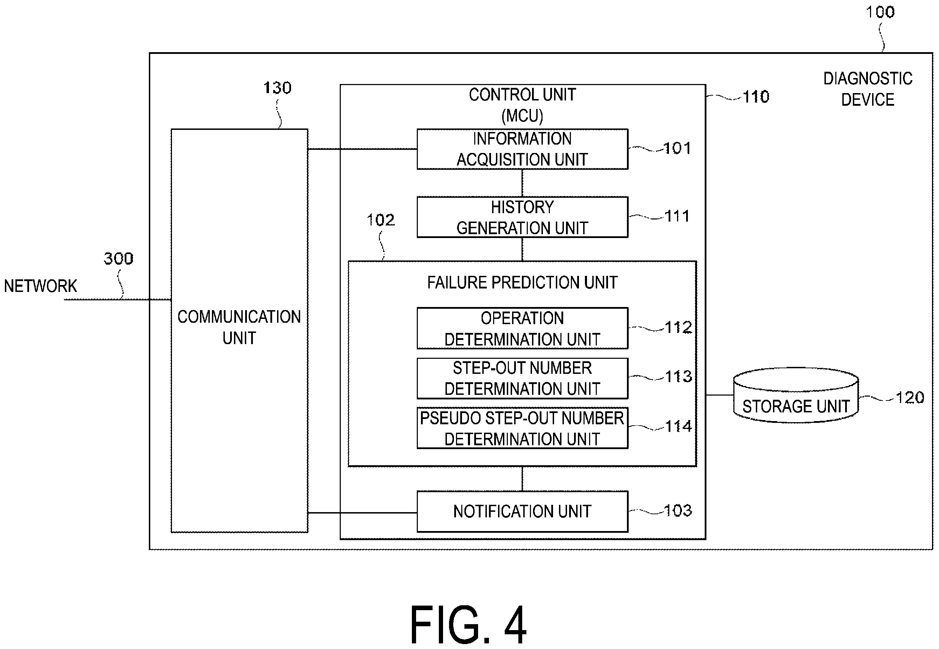

FIG. 4 is a functional block diagram illustrating a functional configuration of the diagnostic device 100.

As illustrated in FIG. 4, the diagnostic device 100 includes a control unit 110, a storage unit 120, and a communication unit 130.

The control unit 110 is an example of a computer realized by a processor such as a CPU and a calculation memory such as a RAM. Specifically, the control unit 110 is realized by, for example, an MCU. The CPU is an arithmetic device that realizes various functions by executing arithmetic processing of a program. The RAM is a volatile memory in which a program to be arithmetically processed by the CPU is stored. The control unit 110 stores function programs stored in the storage unit 120 in the RAM. The function programs stored in the storage unit 120 are programs for realizing various functions of the control unit 110. The CPU realizes various functions of the control unit 110 by executing the function programs stored in the RAM. Among the function programs, programs corresponding to functions to be realized are sequentially stored in the RAM and sequentially executed by the CPU. The program is configured by a function, a fixed value, and the like corresponding to a function. When executing a program, not only a function but also data that is a fixed value is required. A processing capacity of the CPU included in the control unit 110 is higher than a processing capacity of the CPU included in the drive control unit 12 of the drive device 10. A storage capacity of the RAM included in the control unit 110 is larger than a storage capacity of the RAM included in the drive control unit 12.

The storage unit 120 is realized by, for example, a nonvolatile memory such as an EEPROM. The storage unit 120 is a storage device for program storage in which a computer-executable program for realizing various functions is stored. For example, the storage unit 120 stores a program for executing a diagnostic method (hereinafter referred to as a "diagnostic program"). The diagnostic program is a program for executing failure prediction processing described below. In addition, the storage unit 120 stores various types of information used for the diagnostic program, such as threshold values, operation history information, control information, and operation result information. A storage capacity of the storage unit 120 is larger than a storage capacity of the storage unit 16 included in the drive device 10.

The control unit 110 realizes following functional units by the CPU and the RAM cooperating with each other to execute the diagnostic program stored in the storage unit 120. The control unit 110 includes an information acquisition unit 101, a history generation unit 111, a failure prediction unit 102, and a notification unit 103, as specific functional units realized by the diagnostic program. The control unit 110 is connected to the network 300 via the communication unit 130.

The information acquisition unit 101 acquires the control information and operation result information transmitted from the drive devices 10a to 10c connected to the network 300. The information acquisition unit 101 identifies from which of the plurality of drive devices 10a to 10c the command is transmitted, based on the information about a destination included in the control information and the information about a transmission source included in the operation result information.

Based on the operation result information and the control information, the history generation unit 111 generates operation history information in which information about driving of the motor is aggregated.

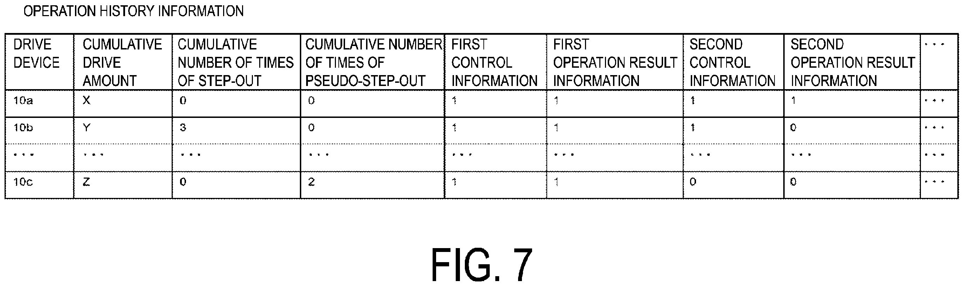

FIG. 7 illustrates one specific example of the operation history information in the present embodiment. As illustrated in FIG. 7, in the operation history information, for example, a value of a cumulative drive amount, a value of a cumulative number of times of step-out, and a value of a cumulative number of times of pseudo step-out are stored in association with information for identifying the drive devices 10a to 10c. As the value of the cumulative drive amount stored in the operation history information, a value obtained by cumulatively adding the value of the drive amount included in the operation result information is stored for each of the drive devices 10a to 10c. In FIG. 7, in the value of the cumulative drive amount, characters (X, Y, Z) are described as values obtained by cumulatively adding the values of the drive amounts of the respective drive devices 10a to 10c. As the value of the cumulative number of times of step-out stored in the operation history information, a value obtained by cumulatively adding the value of the number of times of step-out is stored for each of the drive devices 10a to 10c. As the value of the cumulative number of times of pseudo step-out stored in the operation history information, a value obtained by cumulatively adding the value of the number of times of pseudo step-out is stored for each of the drive devices 10a to 10c.

In addition, in the operation history information, information for identifying whether the control information and the operation result information are acquired is stored for each number of times of the control information and the operation result information in association with the information for identifying the plurality of drive devices 10a to 10c. As the information for identifying whether the control information and the operation result information stored in the operation history information are acquired, for example, 1 is recorded when the control information and the operation result information are acquired, and 0 is stored when the control information and the operation result information are not acquired. In FIG. 7, for example, when the first control information about the drive device 10a is acquired, 1 is stored in a column of the first control information about the drive device 10a. In FIG. 7, for example, when the drive device 10a acquires the first operation result information, 1 is stored in a column of the first operation result information about the drive device 10a. Similarly, 1 is stored in the operation history information for the second and subsequent times. Note that information not included in the information described above may also be stored in the operation history information. For example, the time at which the control information and the operation result information are acquired may be stored in the operation history information.

The failure prediction unit 102 predicts a failure of the motor 20 based on the value included in the operation history information, and a threshold value relating to the failure of the motor 20. When a failure of the motor 20 is predicted based on the operation history information, the failure prediction unit 102 generates information (hereinafter referred to as "failure prediction information") for notifying the higher-level device 200 of the failure of the motor 20. The failure prediction unit 102 includes an operation determination unit 112, a step-out number determination unit 113, and a pseudo step-out number determination unit 114, as specific functional units for generating the failure prediction information. A detailed function of the failure prediction unit 102 will be described below.

The notification unit 103 transmits the failure prediction information about the motor 20 generated by the failure prediction unit 102 to the higher-level device 200 connected to the network 300 via the communication unit 130.

The communication unit 130 is a functional unit for performing LIN communication with the higher-level device 200. In the LIN communication, the communication unit 130 can receive the control information and the operation result information transmitted from the drive devices 10a to 10c as the slave devices and transmit the failure prediction information about the drive devices 10a to 10c to the higher-level device 200 as the master device.

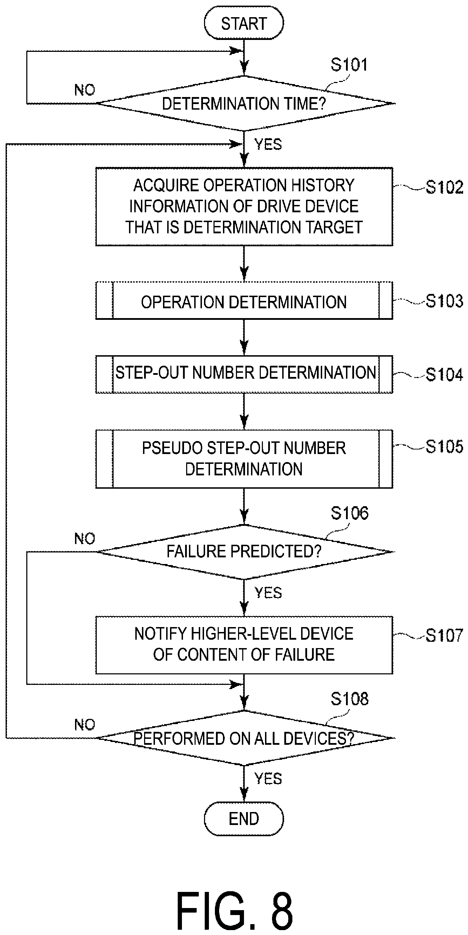

FIG. 8 is a flowchart illustrating one specific example of failure prediction processing executed by the failure prediction unit 102 of the diagnostic device 100. As illustrated in FIG. 8, the failure prediction unit 102 determines whether a predetermined determination time has been reached at a certain time interval, every time the operation result information is acquired, or every time the control information is acquired (step S101). If the predetermined determination time has not been reached (S101: NO), the failure prediction unit 102 repeats the processing of S101.

If the predetermined determination time has been reached (S101: YES), the failure prediction unit 102 acquires the operation history information from the drive devices 10a to 10c becoming determination targets (step S102).

The failure prediction unit 102 causes the operation determination unit 112 to perform operation determination processing based on the acquired operation history information (step S103). The operation determination processing performed by the operation determination unit 112 is processing of determining whether following values indicating the drive amounts of the drive devices 10a to 10c are within a range of threshold values determined in advance to ensure the operation of the motor 20. The value indicating the drive amount of the motor 20 may be, for example, a value of the number of operations of the motor 20 or a value of Pos of the motor 20, in addition to the value of the operation time of the motor 20 described above. The threshold values for the drive amounts used in the operation determination processing are determined in accordance with the specifications of the motors 20 and the specifications of the drive devices 10a to 10c. The threshold values for the drive amount used in the operation determination processing are stored in the storage unit 120.

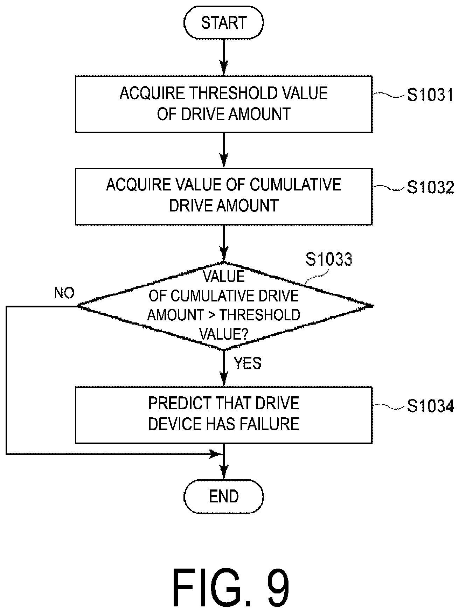

FIG. 9 is a flowchart illustrating one specific example of operation guarantee determination processing in the failure prediction processing, which is executed by the operation determination unit 112 of the failure prediction unit 102. As illustrated in FIG. 9, the operation determination unit 112 acquires the threshold values of the drive amounts from the storage unit 120 (step S1031).

The operation determination unit 112 acquires the value of the cumulative drive amount from the operation history information (step S1032). The operation determination unit 112 compares whether the acquired value of the cumulative drive amount exceeds the threshold values of the drive amounts (step S1033). If the acquired value of the cumulative drive amount does not exceed the threshold values of the drive amounts (S1033 : NO), the operation determination unit 112 ends the operation determination processing.

On the other hand, if the value of the cumulative drive amount exceeds the threshold values of the drive amounts (S1033: YES), the operation determination unit 112 predicts that the drive devices 10a to 10c have a failure (step S1034), and ends the operation determination processing.

The failure prediction unit 102 causes the step-out number determination unit 113 to perform step-out number determination processing based on the acquired operation history information (step S104). In the step-out number determination processing performed by the step-out number determination unit 113, it is determined whether the cumulative number of times of step-out of the motor 20 has reached a threshold value determined in advance. The threshold value for the cumulative number of times of step-out used in the step-out number determination processing is determined based on, for example, the number of times of step-out that is defined in the specification of the motor 20 and does not cause a problem even if the motor continues to step-out. The threshold value for the cumulative number of times of step-out used in the step-out number determination processing is stored in the storage unit 120.

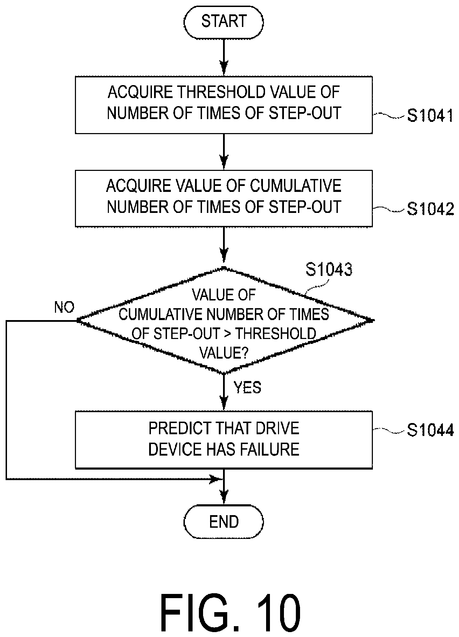

FIG. 10 is a flowchart illustrating one specific example of step-out number determination processing executed by the step-out number determination unit 113 of the failure prediction unit 102. As illustrated in FIG. 10, the step-out number determination unit 113 acquires a threshold value of the number of times of step-out from the storage unit 120 (step S1041).

The step-out number determination unit 113 acquires the value of the cumulative number of times of step-out from the operation history information (step S1042). The step-out number determination unit 113 compares whether the acquired value of the cumulative number of times of step-out exceeds the threshold value for the number of times of step-out (step S1043). If the acquired value of the cumulative number of times of step-out does not exceed the threshold value for the number of times of step-out (S1043: NO), the step-out number determination unit 113 ends the step-out number determination processing.

On the other hand, if the value of the cumulative number of times of step-out exceeds the threshold value for the number of times of step-out (S1043: YES), the step-out number determination unit 113 predicts that the drive devices 10a to 10c have a failure (step S1044), and ends the step-out number determination processing.

The failure prediction unit 102 causes the pseudo step-out number determination unit 114 to perform pseudo step-out number determination processing based on the acquired operation history information (step S105). In the pseudo step-out number determination processing performed by the pseudo step-out number determination unit 114, it is determined whether the number of times of recognizing stall (step-out) even though the operation is performed normally has reached a threshold value determined in advance. The threshold value for the number of times of pseudo step-out used in the pseudo step-out number determination processing is determined based on, for example, the number of times that it is considered that there is no problem even if the pseudo step-out defined in the specification of the motor 20 occurs. The threshold value for the number of times of pseudo step-out used in the pseudo step-out number determination processing is stored in the storage unit 120.

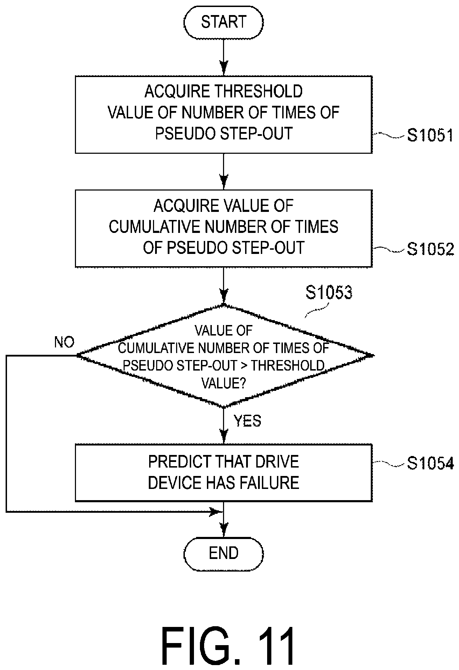

FIG. 11 is a flowchart illustrating one specific example of pseudo step-out number determination processing executed by the pseudo step-out number determination unit 114 of the failure prediction unit 102. As illustrated in FIG. 11, the pseudo step-out number determination unit 114 acquires the threshold value of the number of times of pseudo step-out from the storage unit 120 (step S1051).

The pseudo step-out number determination unit 114 acquires the value of the cumulative number of times of pseudo step-out from the operation history information (step S1052). The pseudo step-out number determination unit 114 determines whether the value of the acquired cumulative number of times of pseudo step-out exceeds the threshold value for the number of times of pseudo step-out (step S1043). If the value of the acquired cumulative number of times of pseudo step-out does not exceed the threshold value for the number of times of pseudo step-out (S1053: NO), the pseudo step-out number determination unit 114 ends the pseudo step-out number determination processing.

On the other hand, if the value of the cumulative number of times of pseudo step-out exceeds the threshold value for the number of times of pseudo step-out (S1053: YES), the pseudo step-out number determination unit 114 predicts that the drive devices 10a to 10c have a failure (step S1054), and ends the pseudo step-out number determination processing.

Returning to FIG. 8, the failure prediction unit 102 determines whether it has been predicted in steps S103 to S105 that the drive devices 10a to 10c have a failure (step S106). If it has not been predicted that the drive devices 10a to 10c have a failure (S106: NO), the processing proceeds to step S108.

If it has been predicted that the drive devices 10a to 10c have a failure (S106: YES), the notification unit 103 notifies the higher-level device 200 of a content of the failure predicted by each functional unit of the failure prediction unit 102 as failure prediction information from the communication unit 130 via the network 300 (step S107). The failure prediction information includes, for example, information indicating that a failure of the drive devices 10a to 10c is predicted because the value of the cumulative drive amount, the value of the cumulative number of times of step-out, or the value of the cumulative number of times of pseudo step-out exceeds each threshold value. Note that the failure prediction information is not limited to the information indicating the specific content of the failure predicted by each functional unit as described above, and only information for identifying the drive devices 10a to 10c for which a failure is predicted may be notified.

The failure prediction unit 102 determines whether the failure prediction processing has been performed on all the drive devices 10a to 10c connected to the communication system 1 (step S 108). If the failure prediction processing has not been performed on all the drive devices 10a to 10c (S108: NO), the failure prediction unit 102 changes the drive devices 10a to 10c becoming a determination target and then repeats the processing of S 102 to S 108. On the other hand, if the failure prediction processing has been performed on all the drive devices 10a to 10c (S108: YES), the failure prediction unit 102 ends the failure prediction processing.

### Effects of Embodiment

According to the communication system 1 described above, following effects can be obtained.

The communication system 1 includes the drive control device 15, the diagnostic device 100, and the network 300 to which the drive control device 15 and the diagnostic device 100 are connected. The drive control device 15 controls driving of the motors 20 included in the drive devices 10a to 10c in accordance with the information received from the higher-level device 200. The diagnostic device 100 diagnoses a driving state of the motor 20. The drive control device 15 includes the control information acquisition unit 11, the drive control unit 12, and the transmission unit 14. The control information acquisition unit 11 acquires the control information for controlling driving of the motor 20 from the higher-level device 200. The drive control unit 12 controls driving of the motor 20 in accordance with the control information. The transmission unit 14 transmits the operation result information about the motor 20 including the drive amount of the motor 20 and the information about the step-out of the motor 20 to the network 300. The diagnostic device 100 includes the information acquisition unit 101 for acquiring the operation result information and the control information from the network 300, the failure prediction unit 102 for generating failure prediction information when a failure of the motor 20 is predicted based on the operation result information and the control information, and the notification unit 103 for notifying the higher-level device 200 of the failure prediction information.

In the communication system 1 described above, the diagnostic device 100 can perform the failure prediction processing based on the operation result information and control information about the drive devices 10a to 10c acquired from the network 300 even when the processing capability of the CPU included in the drive control device 15 or the storage capacity of the storage unit 16 is not sufficient to perform the failure prediction processing. In other words, according to the diagnostic device 100, it is possible to perform the failure prediction processing based on the operation result information and control information about the drive devices 10a to 10c acquired from the network 300, in which the drive control devices 15 are configured by inexpensive ICs.

In addition, in the communication system 1, the diagnostic device 100 includes the history generation unit 111 for generating a driving history in which the information about driving of the motor 20 is aggregated, based on the operation result information and the control information.

According to the diagnostic device 100 in the communication system 1 as described above, it is possible to acquire the information about the operation history of each of the plurality of drive devices 10a to 10c from the operation history information. For this reason, according to the diagnostic device 100, it is possible to reliably perform the failure prediction processing for each of the plurality of drive devices 10a to 10c.

In addition, in the communication system 1, the failure prediction unit 102 predicts a failure of the motor 20 based on the operation result information, and the threshold value relating to the failure of the motor 20. Specifically, the threshold value is a value relating to the drive amount of the motor 20, and the operation determination unit 112 included in the failure prediction unit 102 predicts a failure of the motor 20 based on the drive amount of the motor 20 included in the operation result information, and the threshold value. In addition, the threshold value may be a value relating to the number of times of step-out of the motor 20, and the step-out number determination unit 113 included in the failure prediction unit 102 predicts a failure of the motor 20 based on the number of times of step-out of the motor 20 included in the operation result information, and the threshold value. Further, the threshold value may be a value relating to the number of times that the step-out of the motor 20 is erroneously detected, and the pseudo step-out number determination unit 114 included in the failure prediction unit 102 predicts a failure of the motor 20 based on the number of times that the step-out of the motor 20 is erroneously detected included in the operation result information, and the threshold value.

According to the diagnostic device 100 in the diagnostic device 100 as described above, it is possible to reliably perform failure prediction based on the drive amount, the number of times of step-out, or the number of times that the step-out is erroneously detected, which are main references for performing failure prediction of the motor 20.

### Modifications of Embodiment

While an embodiment of the present invention has been described above, the present invention is not limited to the embodiment of the present invention described above, and includes various aspects included in concepts and claims of the present invention. Further, configurations may be combined with each other or combined with known technology as appropriate to at least partially address the problem described above and achieve the effects described above. For example, a shape, a material, an arrangement, a size, and the like of each of the components in the embodiment described above may be changed as appropriate according to a specific usage aspect of the present invention.

For example, the diagnostic device 100 may execute the failure determination processing based on the control information and the operation result information about each of the drive devices 10a to 10c acquired from the network 300 without generating the operation history information. For example, the diagnostic device 100 may not acquire the control information and the operation result information at the same time but may acquire the control information and the operation result information with a time difference. In addition, for example, if the operation result information is not received even when a certain time or more elapses after the control information is acquired, the diagnostic device 100 may predict that the drive devices 10a to 10c identified by the control information have a failure. In this case, the storage unit 120 may store the time at which the control information or the operation result information is acquired.

For example, in the diagnostic device 100, for the threshold values stored in the storage unit 120, a different value for each of the plurality of drive devices 10a to 10c may be stored. In addition, for example, in the diagnostic device 100, the storage unit 120 may store a different threshold value for each determination target of failure prediction.

For example, in the diagnostic device 100, the failure prediction unit 102 may not execute all the operation determination processing, the step-out number determination processing, and the pseudo step-out number determination processing. That is, the failure prediction unit 102 may execute only one of the determination processing described above. Further, the diagnostic device 100 is not limited to a device independent of the higher-level device 200, as described above. The diagnostic device 100 may be realized by, for example, a diagnostic program executed by a computer included in the higher-level device 200.

### Reference Signs List

1: communication system, 10, 10a to 10c: drive device, 11: control information acquisition unit, 12: drive control unit, 13: result information generation unit, 14: transmission unit, 15: drive control device, 16: storage unit, 17: communication unit, 20: motor, 25: output shaft, 26: primary gear, 31: secondary gear, 32: tertiary gear, 33: output gear, 41: external connection terminal, 42: printed circuit board, 43: flexible printed circuit board, 51: case, 52: cover, 100: diagnostic device, 101: information acquisition unit, 102: failure prediction unit, 103: notification unit, 110: control unit, 111: history generation unit, 112: operation determination unit, 113: step-out number determination unit, 114: pseudo step-out number determination unit, 120: storage unit, 130: communication unit, 200: higher-level device (Master ECU), 300: network

## Claims

1. A communication system comprising:
a drive control device configured to control driving of a motor in accordance with information received from a higher-level device;
a diagnostic device configured to diagnose a driving state of the motor; and
a network to which the drive control device and the diagnostic device are connected, wherein
the drive control device includes
a control information acquisition unit configured to acquire control information for controlling driving of the motor from the higher-level device,
a drive control unit configured to control driving of the motor in accordance with the control information, and
a transmission unit configured to transmit operation result information about the motor to the network, the operation result information including information about a drive amount of the motor and a step-out of the motor, and
the diagnostic device includes
an information acquisition unit configured to acquire the operation result information and the control information from the network,
a failure prediction unit configured to predict a failure of the motor based on the operation result information and the control information, and
a notification unit configured to notify the higher-level device of the prediction of the failure of the motor.

2. The communication system according to claim 1, comprising a history generation unit configured to generate a drive history in which information about driving of the motor is aggregated, based on the operation result information and the control information.

3. The communication system according to claim 1 or 2, wherein the failure prediction unit is configured to predict the failure of the motor based on the operation result information, and a threshold value relating to the failure of the motor.

4. The communication system according to claim 3, wherein
the threshold value is a value relating to a drive amount of the motor, and
the failure prediction unit is configured to predict the failure of the motor based on the drive amount of the motor included in the operation result information, and the threshold value.

5. The communication system according to claim 3, wherein
the threshold value is a value relating to the number of times of step-out of the motor, and
the failure prediction unit is configured to predict the failure of the motor based on the number of times of step-out of the motor included in the operation result information, and the threshold value.

6. The communication system according to claim 3, wherein
the threshold value is a value relating to the number of times that the step-out of the motor is erroneously detected, and
the failure prediction unit is configured to predict the failure of the motor based on the number of times that the step-out of the motor is erroneously detected included in the operation result information, and the threshold value.

7. A diagnostic device configured to diagnose driving of a motor by connecting to a network to which a control device configured to control driving of the motor is connected, the diagnostic device comprising:
an information acquisition unit configured to acquire operation result information about the motor and control information for controlling driving of the motor via the network, the operation result information including information about a drive amount of the motor and a step-out of the motor;
a failure prediction unit configured to predict a failure of the motor based on the operation result information and the control information; and
a notification unit configured to notify a higher-level device of the prediction of the failure of the motor.

8. A diagnostic method executable by a computer configured to diagnose driving of a motor by connecting to a network to which a control device configured to control driving of the motor is connected, the diagnostic method comprising:
acquiring operation result information about the motor and control information for controlling driving of the motor via the network, the operation result information including information about a drive amount of the motor and a step-out of the motor;
predicting a failure of the motor based on the operation result information and the control information; and notifying a higher-level device of the prediction of the failure of the motor.
